# EUROPEAN PATENT APPLICATION

(11) **EP 4 398 545 A1**
(43) Date of publication of application: **10.07.2024**
(21) Application number: 23813261.7
(22) Date of filing: 21.11.2023
(51) Int. Cl.: H04L 51/04, H04L 67/131, H04L 51/216, G06F 3/0484

(54) **ELECTRONIC DEVICE FOR CONTROLLING FUNCTION OF PROCESS CORRESPONDING TO ONE OR MORE MESSENGER DATA SETS, AND METHOD THEREOF**

(30) Priority: 23.11.2022 KR 20220158764; 05.12.2022 KR 20220167731
(71) Applicant: Samsung Electronics Co., Ltd., Suwon-si, Gyeonggi-do 16677 (KR)
(72) Inventor: LEE, Haewook, Gyeonggi-do 16677 (KR); JEONG, Kwanhee, Gyeonggi-do 16677 (KR); HEO, Sekyeong, Gyeonggi-do 16677 (KR)
(74) Representative: HGF
(86) International application number: PCT/KR2023/018805
(87) International publication number: WO 2024/112075

(57) **Abstract**

According to an embodiment, an electronic device may comprise a display, a memory storing instructions, and a processor. The instructions, when executed by the processor, may cause the electronic device to, based on execution of the binder driver, store one or more messenger data sets for executing a function of a target process using a source process in a buffer area of the memory assigned to the target process. The instructions, when executed by the processor, may cause the electronic device to temporarily refrain from initiating an execution of the function of the target process, using the binder driver, in a first state in which an amount of one or more messenger data sets stored in the buffer area is equal to or greater than a threshold value. The instructions, when executed by the processor, may cause the electronic device to display a visual object indicating information for the source process, by controlling the display.

## Description

### [Technical Field]

An embodiment relates to an electronic device for controlling a function of a process corresponding to one or more messenger data sets and a method thereof.

### [Background Art]

Recently, various types of portable electronic devices, such as a smart phone, a tablet PC, a wireless earphone, and a smart watch have been popularized. Such a portable electronic device may execute one or more processes. For example, such portable electronic devices may execute one or more processes (or functions) by executing one or more programs (e.g. various software). To efficiently execute the one or more processes, the electronic device may use a inter process communication (IPC) to obtain or process data between one or more processes, and the electronic device may provide the inter process communication to obtain or process data using a remote procedure call (RPC). By using the remote procedure call when executing a process among the one or more processes, the electronic device may perform a function of another process among the one or more processes.

### [Disclosure]

### [Technical Solution]

According to an embodiment, an electronic device may comprise a display, a memory storing instructions, and a processor. The instructions, when executed by the processor, may cause the electronic device to, based on execution of the binder driver, store one or more messenger data sets for executing a function of a target process using a source process in a buffer area of the memory assigned to the target process. The instructions, when executed by the processor, may cause the electronic device to temporarily refrain from initiating an execution of the function of the target process, using the binder driver, in a first state in which an amount of one or more messenger data sets stored in the buffer area is equal to or greater than a threshold value. The instructions, when executed by the processor, may cause the electronic device to display a visual object indicating information for the source process, by controlling the display.

According to an embodiment, a method of an electronic device method may comprise storing one or more messenger data sets for executing a function of a target process using a source process in a buffer area of a memory assigned to the target process based on an execution of the binder driver. The method may comprise temporarily refraining from initiating an execution of the function of the target process, using binder driver, in a first state in which an amount of one or more messenger data sets equal to or greater than a threshold value is stored in the buffer area. The method may comprise displaying a visual object indicating information for the source process, by controlling a display.

According to an embodiment, an electronic device may comprise a display, a memory storing instructions, and a processor. The instructions, when executed by the processor, may cause the electronic device to, based on execution of the binder driver, store one or more messenger data sets for executing a function of a target process using a source process in a buffer area of the memory assigned to the target process. The instructions, when executed by the processor, may cause the electronic device to generate log information indicating a first state of the source process, based on storing an amount of one or more messenger data sets equal to or greater than a threshold value. The instructions, when executed by the processor, may cause the electronic device to delete the one or more messenger data sets stored in the buffer area, using the generated log information.

According to an embodiment, a method of an electronic device may comprise based on an execution of a binder driver, storing one or more messenger data sets for executing a function of a target process using a source process in a buffer area of a memory assigned to the target process. The method may comprise generating log information indicating a first state of the source process, based on storing an amount of one or more messenger data sets are equal to or greater than a threshold value in the buffer area. The method may comprise deleting the one or more messenger data sets stored in the buffer area, using the generated log information.

### [Description of the Drawings]

FIG. 1 is a block diagram of an electronic device in a network environment, according to an embodiment.
FIG. 2 illustrates an exemplary block diagram of an electronic device, according to an embodiment.
FIG. 3 illustrates an example of one or more programs executed by an electronic device, according to an embodiment.
FIG. 4 illustrates an exemplary signal flowchart in which an electronic device identifies a messenger data set using one or more programs, according to an embodiment.
FIG. 5 illustrates an exemplary state in which an electronic device displays a visual object indicating a termination of at least one program, according to an embodiment.
FIG. 6 illustrates an exemplary flowchart illustrating an operation of an electronic device, according to an embodiment.
FIG. 7 is an exemplary flowchart illustrating an operation in which an electronic device uses log information, according to an embodiment.

### [Mode for Invention]

Hereinafter, various embodiments of the present document will be described with reference to the accompanying drawings.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

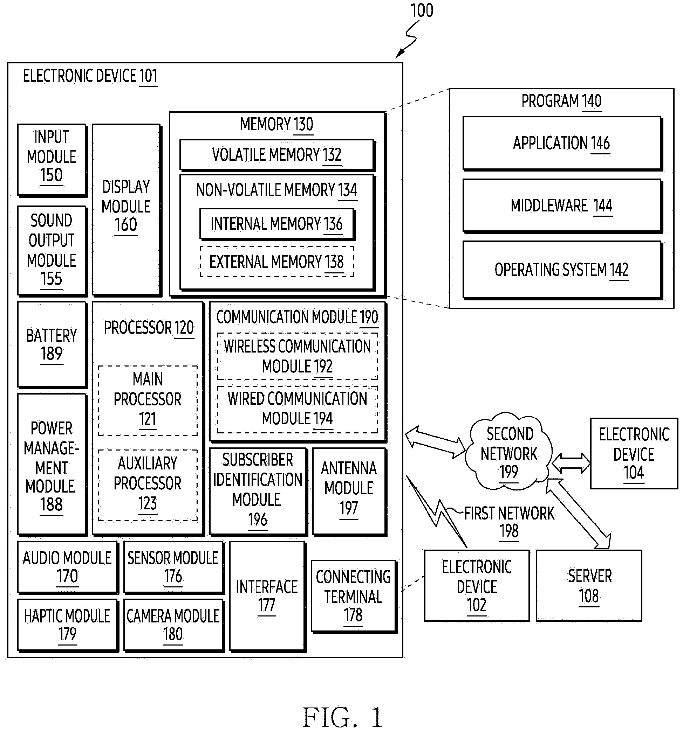

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

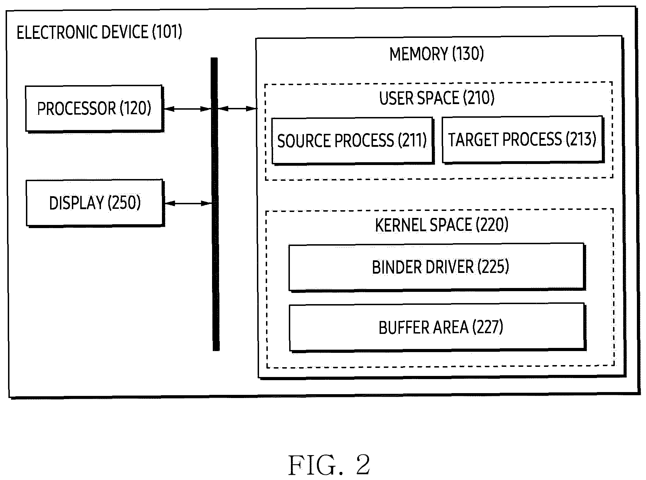

FIG. 2 illustrates an exemplary block diagram of an electronic device, according to an embodiment. The electronic device 101 of FIG. 2 may be an example of the electronic device 101 of FIG. 1. Referring to FIG. 2, according to an embodiment, the electronic device 101 may include at least one of a processor 120, a memory 130, or a display 250. The processor 120, the memory 130, and the display 250 are electronically and/or operably coupled with each other by an electronical component such as a communication bus. Hereinafter, the operational coupling of hardware may mean that a direct or indirect connection between hardware is established by wire or wirelessly, so that a second hardware is controlled by a first hardware among the hardware. Although illustrated based on different blocks within the block diagram illustration of Figure 2, this is merely exemplary and embodiments are not limited thereto, and a portion (e.g., at least a portion of the processor 120, the memory 130, and the communication circuit (not illustrated)) of the hardware of FIG. 2 may be included in a single integrated circuit such as a system on a chip (SoC). The type and/or number of hardware included in the electronic device 101 is not limited to an embodiment of FIG. 2. For example, the electronic device 101 may include only a portion of the hardware illustrated in FIG. 2.

According to an embodiment, the processor 120 of the electronic device 101 may include a hardware component for processing data based on one or more instructions. The hardware component for processing data may include, for example, an arithmetical and logical unit (ALU), a floating point unit (FPU), a field programmable gate array (FPGA), and/or a central processing unit (CPU). The number of processors 120 may be one or more. For example, the processor 120 may have a structure of a multi-core processor such as a dual core, a quad core, or a hexa core. The processor 120 of FIG. 2 may include the processor 120 of FIG. 1. For example, the processor 120 may include a main processor (e.g., the main processor 121 of FIG. 1) and an auxiliary processor (e.g., the auxiliary processor 123 of FIG. 1).

According to an embodiment, the memory 130 of the electronic device 101 may include a hardware component for storing data and/or instructions inputted and/or outputted to the processor 120 of the electronic device 101. The memory 130 may include a volatile memory such as a random-access memory (RAM) and/or a non-volatile memory such as a read-only memory (ROM). For example, the volatile memory may include at least one of a dynamic RAM (DRAM), a static RAM (SRAM), a Cache RAM, and a pseudo SRAM (PSRAM). For example, the non-volatile memory may include at least one of a programmable ROM (PROM), an erasable PROM (EPROM), an electrically erasable PROM (EEPROM), a flash memory, a hard disk, a compact disk, a solid state drive (SSD), and an embedded multimedia card (eMMC). The memory 130 of FIG. 2 may include the memory 130 of FIG. 1.

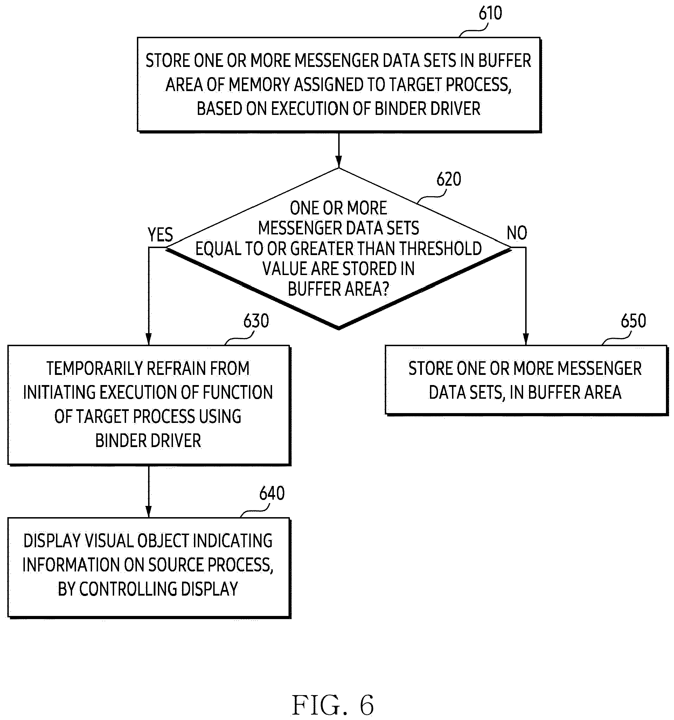

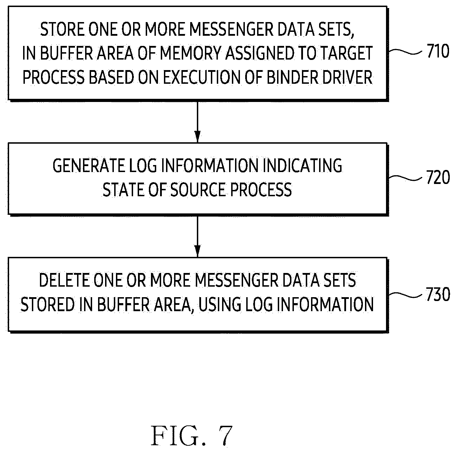

According to an embodiment, in the memory 130 of the electronic device 101, one or more instructions indicating a calculation and/or an operation to be performed on data by the processor 120 may be stored. A set of one or more instructions may be referred to as a firmware, an operating system, a process, a routine, a sub-routine, and/or an application. For example, when a set of a plurality of instructions distributed in a form of an operating system, firmware, driver, and/or application is executed, the electronic device 101 and/or the processor 120 may perform at least one of operations of FIGS. 6 and 7. In the following, a fact that the application is installed in the electronic device 101 means that one or more instructions provided in a form of the application are stored in the memory 130 of the electronic device 101, and may mean that the one or more applications are stored in an executable format (e.g., a file with an extension specified by the operating system of the electronic device 101) by the processor 120 of the electronic device 101.

According to an embodiment, programs distinguished by different spaces 210 and 220 in the memory 130 may be executed by the processor 120. Programs distinguished by different blocks may be stored in the memory 130 of the electronic device 101, based on the executable format by the processor 120 of the electronic device 101. In a state of executing a process distinguished by different blocks, the electronic device 101 may initiate an execution of instructions included in another process. One or more programs of FIG. 2 may be included in the program 140 of FIG. 1. That is, the one or more programs described with reference to FIG. 2, and the subsequent Figures, may comprise one or more of an application (e.g. application 146), middleware (e.g. middleware 144), an operating system, OS, (e.g. operating system 142).

Referring to FIG. 2, according to an embodiment, programs installed in the electronic device 101 may be classified into any one of spaces of FIG. 2. For example, a user space 210 may refer to a memory space (or a virtual address) assigned to each of one or more processes 211 and 213 stored in the memory 130 of electronic device 101. The process (or task) may refer to a unit for executing and/or scheduling a program based on the processor 120.

For example, in a state of executing (e.g. during execution of) at least one process, the electronic device 101 may refrain from using a memory space assigned to another process different from the at least one process. Refraining from using the memory space by the electronic device 101 may mean that the electronic device 101 defers a performance of a function by a set of data assigned to the memory 130.

The electronic device 101 may prevent at least partially changing another process using one process, by distinguishing one or more processes 211 and 213 included in the user space 210, respectively. In a state of executing a source process (e.g. a first process) 211, the electronic device 101 may use a kernel space 220 to perform a function of a target process (e.g. a second process) 213 using a memory space assigned to the target process 213. The electronic device 101 may execute one or more programs included in the kernel space 220 by performing a context change while executing at least one among one or more processes stored in the user space 210.

For example, the context change may mean processing at least one data set based on a conversion of the electronic device 101 from a user mode (e.g., a mode for processing data in the user space 210) to the kernel mode (e.g., a mode for processing data in the kernel space 220). For example, in a state of executing a first process (e.g., the source process 211), the electronic device 101 may store data (e.g., context) for the first process to initiate an execution of a second process based on an interrupt request of the second process (e.g., a target process 213). The data may be stored in a process control block (PCB) of the first process. An operation of storing or assigning data (e.g., context) based on the execution of the second process may be performed (e.g., context change), in a state in which the data is stored. For example, the electronic device 101 may perform the context change based on scheduling assigned to each of the processes.

According to an embodiment, one or more processes 211 and 213 accessible to a user of the electronic device 101 may be stored in the user space 210. For example, each of the one or more processes 211 and 213 may be classified as a program designed to target the user of the electronic device 101. For example, each of the one or more processes 211 and 213 may correspond to applications stored in the memory 130. The electronic device 101 may perform a function corresponding to each of the one or more processes by using the one or more processes 211 and 213. For example, at least one of the source process 211 and/or the target process 213 may include a plurality of processes.

For example, the kernel space 220 may mean a memory space assigned to execute an operating system (e.g., Android OS) of the electronic device 101. The operating system may be divided into a kernel and a program. The electronic device 101 may manage data sets for executing the operating system using the kernel. The electronic device 101 may control one or more services provided by hardware and/or operating systems using the kernel. For example, a binder driver 225 may be a program (e.g., a program including one or more instructions for controlling the memory 130 of FIG. 2) in which each of the one or more processes stored in the user space 210 controls a memory space (e.g., a buffer area) for managing data sets to perform a function of another process.

According to an embodiment, the electronic device 101 may assign a buffer area 227 of the memory 130 in response to each of messenger data sets generated using one or more processes stored in the memory 130 (e.g., volatile memory). The electronic device 101 may process data stored in the buffer area 227 using a binder driver 225 for managing data between the one or more processes, based on operating system (e.g., Android OS). While the electronic device 101 executes at least one process, the buffer area 227 may be used to execute a function of another process. The electronic device 101 may store one or more messenger data sets obtained using the at least one process in the buffer area 227 mapped to the other process. That is, each of the one or more messenger data sets (as described in any of the examples or embodiments throughout this disclosure) may include data for executing another process in a state in which the electronic device 101 executes at least one process (e.g. when the at least one process is executing). Each of the one or more messenger data sets may include information on the at least one process and the other process. The one or more messenger data sets may be used by the electronic device 101 to perform a system call (e.g., a remote procedure call (RPC)).

For example, in a state (e.g. a first state of the electronic device and/or process) in which the generated one or more messenger data sets (e.g. an amount of the one or more messenger data sets) stored in the buffer area is equal to or greater than a threshold (e.g. a threshold value, or threshold amount), the electronic device 101 may temporarily refrain from executing the other process.

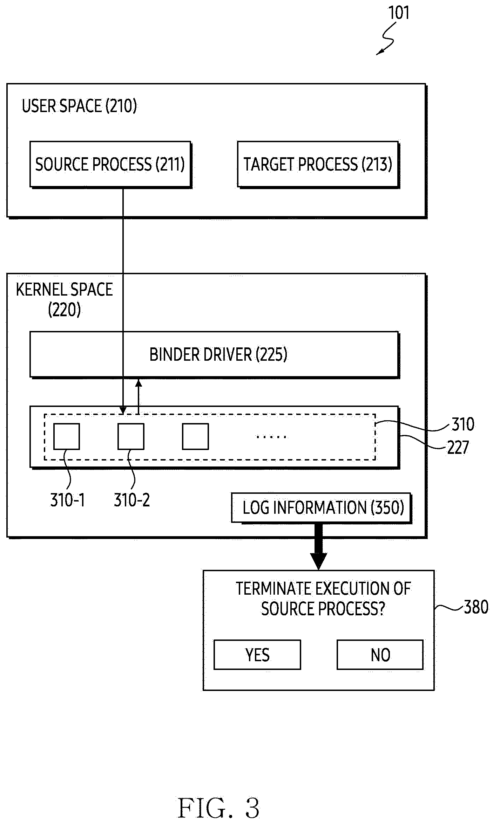

In some examples as described herein, the one or more generated messenger data sets may be binder transactions. In some examples, the state (e.g. first state) may include a state in which a number (or amount) of one or more messenger data sets 310 generated is equal to or greater than a designated threshold value (e.g., a threshold number) are stored in the buffer area 227. The state may include a state in which an amount of one or more messenger data sets 310 are stored in, or occupy at least a portion (e.g., a threshold value, or amount) of a designated area (e.g., area for storing data based on a function to provide one-way communication) in the buffer area 227. The state may include a state in which the one or more messenger data sets 310 occupy more than or equal to a threshold value (e.g., a percentage amount, e.g. 50%) of the buffer area. Each of the one or more messenger data sets may include information in which the electronic device 101 requests executing the other process. That is, the one or more messenger sets may comprise information on at least one other process, different to the process being executed, to be called (or performed) by the executing process. An operation of the electronic device 101 using the binder driver 225 to process a messenger data set stored in the buffer area 227 will be described later in FIG. 3.

According to an embodiment, the display 250 of the electronic device 101 may output visualized (or visual) information to a user. In some examples, the visual information may be output as a visual object. For example, the display 250 may be controlled by the processor 120 and/or a graphic processing unit (GPU) to output visualized information to the user. The display 250 may include a flat panel display (FPD) and/or an electronic paper. The FPD may include a liquid crystal display (LCD), a plasma display panel (PDP), a digital mirror device (DMD), one or more LEDs (light emitting diodes), and/or micro LEDs. The LED may include an organic LED (OLED). The display 250 of FIG. 2 may include the display module 160 of FIG. 1.

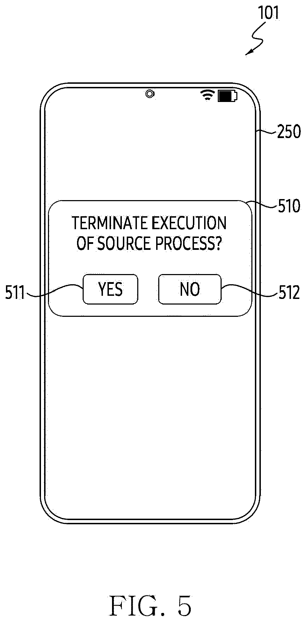

According to an embodiment, the electronic device 101 may display a visual object on the display 250 indicating information on at least one process stored in the memory 130 in a state in which the binder driver 225 is being executed. For example, the electronic device 101 may store one or more messenger data sets equal to or greater than a designated threshold value in the buffer area by using the at least one process. In a state in which the one or more messenger data sets equal to or greater than the designated threshold value are stored, the electronic device 101 may obtain log information corresponding to the at least one process. The log information may include information indicating that the one or more messenger data sets equal to or greater than the designated threshold value are stored using the at least one process. An operation of displaying the visual object by the electronic device 101 using the log information will be described later in FIG. 5.

As described above, according to an embodiment, in a state of (e.g., when) executing one or more processes stored in the memory 130, the electronic device 101 may obtain a messenger data set for performing a function of a second process by using a first process among one or more processes. The electronic device 101 may store the obtained messenger data set in the buffer area 227 of the memory 130 corresponding to the second process. The electronic device 101 may perform the function of the second process using the messenger data set stored in the buffer area 227. The electronic device 101 may perform the function of the second process corresponding to each of the one or more messenger data sets based on storing the one or more messenger data sets in the buffer area 227 corresponding to the second process by using the first process. For example, in a state of storing the one or more messenger data sets equal to or greater than a designated threshold value (e.g. a first state, where one or more generated messenger data sets stored is equal to or greater than the designated threshold value), the electronic device 101 may delay a performance of the function of the second process corresponding to each of the one or more messenger data sets. The electronic device 101 may defer the performance of the function of the second process in the state. The electronic device 101 may identify log information on the first process used to obtain the one or more messenger data sets, based on the identification that a performance of the function of the second process is pending. The electronic device 101 may temporarily refrain from obtaining at least one data set using the first process, based on identifying the log information. The electronic device 101 may prevent a crash between a plurality of processes stored in the electronic device 101, by temporarily refraining from obtaining the at least one data set using the first process.

Hereinafter, in FIG. 3, an operation for the electronic device 101 to process obtained data by using one or more processes stored in the electronic device 101 will be described later.

FIG. 3 illustrates an example of one or more programs executed by an electronic device, according to an embodiment. The electronic device 101 of FIG. 3 may comprise the electronic device 101 of FIGS. 1 and 2.

According to an embodiment, in order to execute one or more programs stored in a kernel space 220, the electronic device 101 may execute at least one interface (e.g., a system call interface) using one or more processes 211 and 213 stored in a user space 210. For example, in a state in which the electronic device 101 executes at least one process stored in the user space 210, the binder driver 225 may be used to control a communication (e.g., inter process communication (IPC)) for calling a function of another process. The electronic device 101 may perform a function of another process different from the one process using one process, by performing a system call (e.g., remote procedure call (RPC)) by using the binder driver 225.

For example, the electronic devices 101 may use at least one function (or procedure) to perform a system call. The electronic device 101 may generate one or more messenger data sets (e.g., a binder transaction) to perform a function of another process, by using one process stored in the user space 210. The one or more messenger data sets may include information on the one process and the other process. The one or more messenger data sets may include information indicating a function of the one process and the other process. The one or more messenger data sets may include information on an area (or address) to which the one process and/or the other process is assigned in the memory.

For example, the electronic device 101 may use (e.g. perform) at least one function to store the one or more messenger data sets in the kernel space 220. The at least one function may include a function (e.g., synchronous call) for providing two-way communication between one process and another process and/or a function (e.g., asynchronous call or one-way call) for providing one-way communication from the one process to the other process. For example, the function for providing two-way communication may be used to share synchronized information between the one process and the other process.

For example, the electronic device 101 may temporarily refrain from performing the function of the one process, while performing the function of the other process, by using the function for providing two-way communication. That is, when using, or performing, two way communication (e.g. synchronous call), the electronic device may temporarily refrain (e.g. wait) to perform a function of the one process (i.e. a different process) while the function of the other process is performed. The electronic device 101 may initiate performing the function of the one process temporarily refrained from performing, based on completing performance of the function of the other process. For example, the electronic device 101 may perform the function of the other process by using the function for providing one-way communication, independently of performing the function of the one process. That is when using, or performing, one way communication (e.g. asynchronous call), the electronic device does not temporarily refrain (e.g. wait to perform) a function of the other process (e.g. a different process).

In some examples (e.g. when performing a remote function call through the binder when executing Android OS), a large amount, or number, of one way calls from a source process (e.g. an executing process) may result in these calls (e.g. binder transactions) occupying the binder buffer. That is, as such calls are not processed simultaneously at the target process, the binder buffer area of the target process may be filled. This may affect subsequent binder transactions on the same target (e.g. such later transactions may fail, or be unable to process).

According to an embodiment, the electronic device 101 may store one or more messenger data sets generated using at least one process in the buffer area 227 of the kernel space 220, by using the binder driver 225 stored in the kernel space 220. For example, based on an execution of the source process 211, the electronic device 101 may initiate an execution of the binder driver 225, by performing context change to perform the function of a target process 213. The electronic device 101 may map the buffer area 227 to each of one or more processes in the kernel space 220, based on the execution of the binder driver 225. Based on the execution of the binder driver 225, the electronic device 101 may store one or more messenger data sets for performing the function of the target process 213 in the buffer area 227 mapped to the target process 213.

For example, the buffer area 227 may be distinguished (e.g. divided, or arranged, into areas) based on at least one function. For example, the buffer area may be distinguished into an area for storing one or more messenger data sets that are generated based on a function (e.g., sync call) for providing interactive communication between a plurality of processes and/or an area for storing one or more messenger data sets generated based on a function (e.g., async call) for providing one-way communication.

According to an embodiment, based on the execution of the source process 211, the electronic device 101 may generate one or more messenger data sets 310 to perform the function of the target process 213 by using the binder driver 225. The one or more messenger data sets 310 may be generated based on the function for providing one-way communication. The electronic device 101 may store the one or more messenger data sets 310 in the buffer area 227 assigned to the target process 213 in the kernel space 220. For example, the electronic device 101 may perform the function of the target process 213 corresponding to the one or more messenger data sets 310.

For example, the one or more messenger data sets 310 (e.g. one or more messenger data sets 310 to perform the function of the target process 213) stored in the buffer area 227 may be processed based on queue data. The electronic device 101 may perform the function of the target process 213, based on a sequence in which one or more messenger data sets 310 are stored in the buffer area 227. For example, based on the execution of the binder driver 225, the electronic device 101 may sequentially process a messenger data set 310-2 after processing a messenger data set 310-1 stored in the buffer area 227. For example, the electronic device 101 may defer processing (e.g. may wait to process) of the messenger data set 310-2, while processing one or more messenger data sets stored (or assigned) before the messenger data set 310-2. For example, the one or more messenger data sets may include substantially similar information.

While processing the one or more messenger data sets, the electronic device 101 may set a designated state to prevent processing (e.g. defer processing) of the messenger data set 310-2. In examples, the electronic device 101 may generate log information 350 corresponding to the source process 211 based on (in response to) the designated state.

For example, the designated state may include a state (e.g. a first state) in which one or more messenger data sets 310 (e.g. an amount of the one or more messenger data sets) is equal to or greater than a designated threshold value (e.g., a number of about 50) are stored in the buffer area 227. The designated state may include a state in which one or more messenger data sets 310 are stored in a portion (e.g., 80%) of the designated area (e.g., an area for storing data based on a function to provide one-way communication) in the buffer area 227. The designated state may include a state in which the one or more messenger data sets 310 occupy more than a threshold value (e.g., a percentage amount, e.g. 50%) of the buffer area. In some examples, this may be state in which the one or more messenger data sets 310 occupy more than a threshold value (e.g. a percentage amount) of the designated area of the buffer aera 227.

According to an embodiment, based on (in response to) identifying the designated state, the electronic device 101 may identify one or more messenger data sets 310 obtained using the source process 211 as a spam data set. The spam data set may include a plurality of messenger data sets including the same information. In some examples, the spam data set may include a plurality of messenger data sets 310 comprising substantially the same information. For example, the electronic device 101 may obtain information on the source process 211 using log information 350 based on identifying the designated state. The information on the source process 211 may include information indicating that the electronic device 101 uses the source process 211 to store one or more messenger data sets 310 equal to or greater than the designated threshold value in the buffer area 227 corresponding to the target process 213.

According to an embodiment, in a state (e.g. a first state) in which one or more messenger data sets 310 (e.g. an amount of the one or more messenger data sets) stored in the buffer area 227 mapped to the target process 213 are equal to or greater than a threshold value , the electronic device 101 may temporarily refrain from initiating an execution of a function of the target process 213. That is, the electronic device may temporarily refrain from initiating an execution of the function of the target process 213 corresponding to the one or more messenger data sets. In some examples, the electronic device 101 may temporarily refrain from initiating the execution of the target process 213 using log information 350. Based on temporarily refraining from initiating the execution of the function of target process 213, the electronic device 101 may delete at least one of the one or more messenger data sets 310. For example, deleting at least one of the one or more messenger data sets 310 may include freeing the one or more messenger data sets 310 stored in the buffer area Freeing the one or more messenger data sets 310 in the buffer area may mean that the electronic device 101 changes an area in which the one or more messenger data sets 310 are stored to a state in which another data set may be used to overwrite the area. For example, the electronic device 101 may secure the buffer area 227 assigned to the target process 213 based on deleting the at least one or more messenger data sets 310. For example, based on deleting the one or more messenger data sets 310 stored in the buffer area 227, the electronic device 101 may change log information 350 indicating information of the source process. However, it is not limited thereto.

According to an embodiment, in the designated state, the electronic device 101 may delete the messenger data set 310-2 obtained using the source process 211, based on the identification of log information 350 for the source process 211. For example, in a designated state, the electronic device 101 may identify that the designated state is changed to a state different from the designated state, by deleting at least one (e.g., the messenger data set 310-2) of the one or more messenger data sets 310. That is, by deletion of the one or more messenger data sets (e.g. messenger data set 310-2), an amount of messenger data sets stored in the buffer area 227 mapped to the target process 213 may no longer be equal to or greater than a threshold, and therefore, may be identified, or determined, to be in a state different from the designated state, for example, a second state. In the different state, the electronic device 101 may store the messenger data set (e.g. a further, or additional messenger data set) obtained using the source process 211 in the kernel space 220, by using the binder driver 225. In the different state, the electronic device may perform a function corresponding to the messenger data set based on the execution of the target process. In some examples, the different state may include a state in which one or more messenger data sets less than the threshold value are stored in the buffer area mapped to the target process 213. However, it is not limited thereto.

According to an embodiment, the electronic device 101 may display at least one visual object 380 including information on the source process 211 on the display, by using log information 350. An operation in which the electronic device 101 displays the at least one visual object 380 will be described later in FIG. 5.

As described above, according to an embodiment, the electronic device 101 may distinguish a memory area into a user space 210 to identify interaction between a user and a process, and a kernel space 220 to perform a function based on operating system of the electronic device 101. The electronic device 101 may use the kernel space 220 to exchange the messenger data sets between a plurality of processes (e.g. source process 211 and target process 213) stored in the user space 210. The electronic device 101 may store the messenger data set in the buffer area 227 mapped to each of the plurality of processes (e.g. the plurality of processes stored in the user space 210) by using the binder driver 225 stored in the kernel space 220. When a messenger data set equal to or greater than a designated threshold value is stored in the buffer area, the electronic device 101 may identify a state in which performance of the function of the target process 213 using the messenger data set is deferred. Based on the identification of the state, the electronic device 101 may temporarily refrain from performing the function of the target process 213 using the messenger data set stored in the buffer area 227. Based on temporarily refraining from performing the function of the target process 213 using the messenger data set, the electronic device 101 may delete the messenger data set in the buffer area 227. Based on deleting the messenger data set in the buffer area 227, the electronic device 101 may secure a storable area in the buffer area 227. Based on temporarily refraining from performing the function of the target process 213, the electronic device 101 may obtain log information 350 including information on the source process 211 used to obtain the messenger data set. The electronic device 101 may temporarily refrain from generating a messenger data set using the source process 211, by using log information 350. The electronic device 101 may display a visual object 380 including information on the source process 211 on the display by using log information 350. The electronic device 101 may provide information on the source process 211 requesting the user to generate a spam messenger data set, by displaying the visual object 380. The electronic device 101 may provide a user experience capable of stably using the electronic device 101, by providing the information to the user.

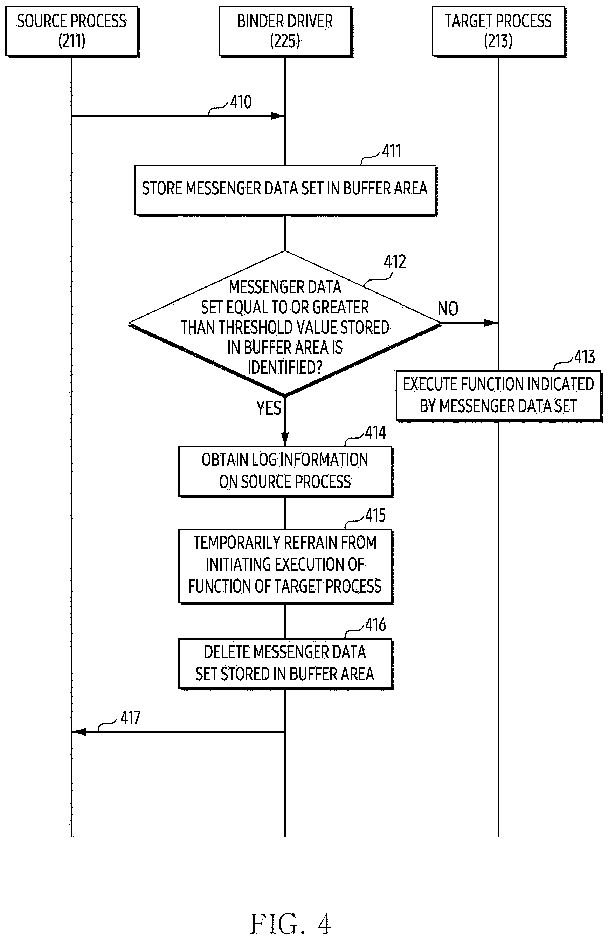

FIG. 4 illustrates an exemplary signal flowchart in which an electronic device identifies a messenger data set using one or more programs, according to an embodiment. The electronic device 101 of FIG. 4 may include the electronic device 101 of FIGS. 1 to 3. Referring to FIG. 4, one or more processes 211 and 213 may be referred to one or more processes 211 and 213 of FIG. 2. The binder driver 225 may be referred to the binder driver 225 of FIG. 2.

Referring to FIG. 4, the electronic device 101 may generate a messenger data set 410 to perform the function of the target process 213, based on the execution of the source process 211. In operation 411, the electronic device 101 may store (or assign) the messenger data set 410 in a buffer area (e.g., the buffer area 227 of FIG. 2) corresponding to the target process 213, using the binder driver 225.

For example, in operation 412, the electronic device 101 may identify whether a messenger data set equal to or greater than a threshold value stored in the buffer area is identified, based on the execution of the binder driver 225. For example, when a messenger data set equal to or greater than a threshold value is not identified (operation 412-NO), in operation 413, the electronic device 101 may execute a function indicated by the messenger data set 410 using the target process 213. In some examples, it is identified whether a messenger data set (e.g. being one or more generated messenger data sets to be stored in the buffer area) is equal or greater than the threshold, as previously defined.

For example, when a messenger data set is equal to or greater than a threshold value is identified (operation 412-YES), in operation 414, the electronic device 101 may obtain log information (e.g., the log information 350 of FIG. 3) on the source process 211. The log information may include information on the source process 211 requesting to generate a messenger data set equal to or greater than a threshold value. In some examples, the information may comprise information on the source process 211 requesting to generate a messenger data set which comprises a number, or amount, of one or more messenger data sets stored in the buffer area being equal to or greater than a threshold.

For example, in operation 415, in a state of identifying a messenger dataset equal to or greater than a threshold value, the electronic device 101 may temporarily refrain from initiating the execution of the function of the target process 213. In operation 416, the electronic device 101 may delete the messenger data set stored in the buffer area, based on temporarily refraining from initiating the execution of the function. Deleting the messenger data set may include converting the buffer area in which the messenger data set is stored into an overwritable state, by using another data set. The electronic device 101 may obtain a data set 417 for the source process 211, by obtaining log information corresponding to the source process 211, in the state. For example, the data set 417 may include information on the source process 211, which requests (e.g. which has performed a request to) the electronic device 101 to generate a spam data set. For example, the data set 417 may include at least one function (e.g., BR_ONEWAY_SPAM_SUSPECT). The electronic device 101 may generate log information (e.g., call stack) for the source process 211 based on obtaining the data set 417. The electronic device 101 may display information on an application corresponding to the source process 211 to the user with a control of a display, by using the data set 417. The electronic device 101 may guide processing for the source process 211 by providing information (e.g. the visual information) on the source process 211 to the user.

As described above, according to an embodiment, the electronic device 101 may identify information on the source process 211 requesting to generate a spam data set using log information. The electronic device 101 may temporarily refrain from performing the function of the target process 213 corresponding to the messenger data set 410 generated using the source process 211, by using log information. The electronic device 101 may prevent malfunction of an application corresponding to the target process 213 stored in the electronic device 101, by temporarily refraining from performing the function.

FIG. 5 illustrates an exemplary state in which an electronic device displays a visual object indicating a termination of at least one program, according to an embodiment. The electronic device 101 of FIG. 5 may include the electronic device 101 of FIGS. 1 to 4.

Referring to FIG. 5, according to an embodiment, the electronic device 101 may generate one or more messenger data sets for instructing a performance of a function of the target process 213 of FIG. 2, by using the source process 211 of FIG. 2. The electronic device 101 may store one or more messenger data sets in a buffer area (e.g., the buffer area 227 of FIG. 2) corresponding to the target process 213, by using the binder driver 225 of FIG. 2. In a state (e.g. a first state) in which the one or more messenger data sets stored in the buffer area is equal to or greater than the threshold value, the electronic device 101 may temporarily refrain from initiating the execution of the function of the target process, by using the binder driver (e.g., the binder driver 225 of FIG. 2). The electronic device 101 may obtain log information including information on the source process, in the state.

According to an embodiment, the electronic device 101 may delete at least one of the one or more messenger data sets stored in the buffer area, based on obtaining the log information. The electronic device 101 may reduce usage of the buffer area, by deleting at least one of the one or more messenger data sets. For example, the electronic device 101 may identify a state (e.g. a second state, different to the first state) in which the one or more messenger data sets below the threshold value, by deleting at least one. The electronic device 101 may fetch a messenger data set different from the one or more messenger data sets in the buffer area, by using the source process, in the state. However, it is not limited thereto.

According to an embodiment, the electronic device 101 may control the display 250 using log information to display a visual object 510. For example, the visual object 510 may include information indicating a source process and/or an application corresponding to the source process. In some examples, the visual object 510 may comprise a pop-up window for providing at least one notification to a user. For example, the visual object 510 may include the visual object 380 of FIG. 3. However, visual object 510 is not limited thereto, and may comprise any form, or shape of a visual object providing a visual indication (notification) to the user on the source process.

The electronic device 101 may guide processing for a source process and/or an application corresponding to the source process to a user, by using the visual object 510. For example, the electronic device 101 may guide a termination (e.g. guide the user to perform a termination by means of input to the visual object 510) of the source process and/or the application to a user, by using the visual object 510.

According to an embodiment, in response to an input (e.g. a user input) indicating a selection of a button 511, the electronic device 101 may terminate an execution of the source process (e.g., the source process 211 of FIG. 2). For example, terminating the execution of the source process may include freeing data for executing the source process from an area assigned in a memory area (e.g., the user space 210 of FIG. 2)). For example, the electronic device 101 may terminate the execution of the source process based on a memory policy (or memory management). The electronic device 101 may reduce usage of the memory by terminating the execution of the source process. The electronic device 101 may prevent a clash between the source process and the target process, by terminating the execution of the source process.

According to an embodiment, in response to receiving an input (e.g. a user input) indicating a selection of a button 512, the electronic device 101 may maintain a state (e.g. maintain a first state) in which one or more messenger data sets equal to or greater than a threshold value are stored in the buffer area assigned to the target process. In the state, the electronic device 101 may temporarily refrain from obtaining a messenger data set to execute a function of the target process by using the source process. For example, the electronic device 101 may delete the messenger data set stored in the buffer area by using the binder driver. However, it is not limited thereto.

As described above, the electronic device 101 may identify a source process generating an excessive spam messenger data set by using log information. That is, the electronic device 101 may identify a source process that is generating a messenger data set which comprises a number, or amount, of messenger data sets, being equal to or greater than a threshold value, as a spam messenger data set by using the log information. The electronic device 101 may temporarily refrain from performing the function of the target process indicated by the spam messenger data set generated using the source process. The electronic device 101 may display the visual object 510 including information on the source process by controlling the display 250 using the log information. As the electronic device 101 uses log information on the source process requesting to generate a spam data set, the electronic device 101 may provide a user experience capable of using the electronic device 101 more stably. That is, the electronic device 101 may mitigate and/or reduce failures associated with further processes (e.g. binder transactions) other than the spam data set.

FIG. 6 illustrates an exemplary flowchart illustrating an operation of an electronic device, according to an embodiment. At least a portion of operations of FIG. 6 may be performed by the electronic device 101 of FIG. 2 and/or the processor 120 of FIG. 2. Each of operations of FIG. 6 may be performed sequentially, but is not necessarily performed sequentially. For example, the sequence of each of the operations may be changed, and at least two operations may be performed in parallel.

Referring to FIG. 6, according to an embodiment, in operation 610, the electronic device may store one or more messenger data sets for executing a function of a target process using a source process in a buffer area of a memory assigned to the target process, based on an execution of a binder driver. For example, the electronic device may manage a memory area corresponding to a kernel space, by using a binder driver (e.g., the binder driver 225 in FIG. 2) stored in the kernel space (e.g., the kernel space 220 of FIG. 2). One or more messenger data sets may include information for the electronic device to perform the function of the target process in an execution state of the source process. One or more messenger data sets may be occupied in a part of the buffer area (e.g., the buffer area 227 of FIG. 2) by the binder driver.

Referring to FIG. 6, according to an embodiment, in operation 620, the electronic device may identify whether one or more messenger data sets equal to or greater than a threshold value are stored in the buffer area. For example, based on identifying whether one or more messenger data sets equal to or greater than a threshold value are stored, the electronic device may identify one or more messenger data sets generated by the source process as a spam data set. The electronic device may identify the source process as an abnormally driven application based on identifying the one or more messenger data sets as a spam data set.

Referring to FIG. 6, according to an embodiment, in operation 630, the electronic device may temporarily refrain from initiating the execution of the function of the target process using the binder driver, in a state(e.g. a first state)(operation 620-YES) in which one or more messenger data sets equal to or greater than the threshold value are stored in the buffer area. The electronic device may process data sets pended in the buffer area assigned to the target process, by temporarily refraining from initiating the execution of the function of the target process. The electronic device may reduce the usage of the buffer area by deleting at least one of the one or more messenger data sets, in the state. The electronic device may perform smoothly the function of the target process, by reducing the usage of the buffer area.

Referring to FIG. 6, according to an embodiment, in operation 640, the electronic device may display a visual object (e.g. as visual information) indicating information on the source process, by controlling a display. The visual object may be referred to the visual object 510 of FIG. 5. The electronic device may provide information on the source process requesting to generate a spam data set by providing a visual object to the user. The electronic device may provide a guide for the source process causing a clash between processes in the electronic device by providing a visual object to the user.

Referring to FIG. 6, according to an embodiment, in a state(e.g. in a second state) (operation 620-NO) in which the one or more first messenger data sets below the threshold value are stored, in operation 650, the electronic device may store one or more second messenger data sets different from one or more first messenger data sets, which are one or more messenger data sets. For example, the electronic device may identify the source process used to generate one or more messenger data sets as a normally driven application, in the state. However, it is not limited thereto.

FIG. 7 is an exemplary flowchart illustrating an operation in which an electronic device uses log information, according to an embodiment. At least a portion of operations of FIG. 7 may be performed by the electronic device 101 of FIG. 2 and/or the processor 120 of FIG. 2. Each operations of FIG. 7 may be performed sequentially, but is not necessarily performed sequentially. For example, the sequence of each operation may be changed, and at least two operations may be performed in parallel.

Referring to FIG. 7, according to an embodiment, in operation 710, the electronic device may store one or more messenger data sets for executing a function of a target process using a source process, in a buffer area of a memory assigned to the target process based on an execution of a binder driver. An operation performed by the electronic device in operation 710 may be at least partially related to the operation performed in operation 610 of FIG. 6.

Referring to FIG. 7, according to an embodiment, in operation 720, the electronic device may generate log information indicating a state of the source process, based on storing one or more messenger data sets equal to or greater than a threshold value in the buffer area. In some examples, the log information may indicate a first state of the source process based on storing one or more messenger data sets equal to or greater than a threshold value in the buffer area. The electronic device may temporarily refrain from performing the function of the target process corresponding to the one or more messenger data sets, by using log information indicating the state of the source process. The electronic device may identify the source process as an abnormally driven application using the log information. Using the log information, the electronic device may display a visual object (e.g., the visual object 510 of FIG. 5) indicating the source process to the user by control a display. The electronic device may guide to terminate the source process to the user, by displaying the visual object. In response to an input indicating the termination of the source process, the electronic device may terminate an execution of the source process. Based on terminating the execution of the source process, the electronic device may free one or more messenger data sets corresponding to the source process in the buffer area. After freeing the one or more messenger data sets, the electronic device may store another messenger data set generated based on the execution of the source process in the buffer area corresponding to the target process. The electronic device may perform an operation based on the other messenger data set stored in the buffer area, based on the execution of the target process. The electronic device may prevent a crash between processes stored in the electronic device by terminating the execution of the source process.

Referring to FIG. 7, according to an embodiment, in operation 730, the electronic device may delete one or more messenger data sets stored in the buffer area using the generated log information. The one or more messenger data sets may refer to a plurality of data sets including the same information. The one or more data sets may mean pending async transaction generated based on a function to provide one-way communication pended in the buffer area assigned to the target process by the electronic device. The electronic device may prevent unnecessary repetition of the operation based on deleting the one or more messenger data sets.

For example, the electronic device may maintain an available space of the buffer area by deleting the one or more messenger data. The available space may include a space for storing at least one data set. The electronic device may provide a user experience based on higher stability to a user, by smoothly performing the function of the target process using the available space.

According to an embodiment, the electronic device may obtain information indicating one process used to generate a plurality of data sets including the same information. Using the information, the electronic device may temporarily refrain from executing a function of another process indicated by the plurality of data sets. A method for the electronic device to temporarily refrain from executing the function may be required.

As described above, according to an embodiment, an electronic device may comprise a display 250, a memory 130 storing instructions, and a processor 120. The instructions, when executed by the processor, may cause the electronic device to, based on execution of the binder driver 225, store one or more messenger data sets 310 for executing a function of a target process 213 using a source process 211 in a buffer area 227 of the memory assigned to the target process. The instructions, when executed by the processor, may cause the electronic device to temporarily refrain from initiating an execution of the function of the target process, using the binder driver, in a first state in which an amount of one or more messenger data sets stored in the buffer area is equal to or greater than a threshold value. The instructions, when executed by the processor, may cause the electronic device to display a visual object indicating information for the source process, by controlling the display.

For example, the instructions, when executed by the processor, may cause the electronic device to delete at least one among the one or more messenger data sets stored in the buffer area of the memory assigned to the target process, based on temporarily refraining from initiating the execution of the function of the target process.

For example, the instructions, when executed by the processor, may cause the electronic device to identify each of the one or more messenger data sets matching the function of the target process as a spam data set.

For example, the one or more messenger data sets may be one or more first messenger data sets. The instructions, when executed by the processor, may cause the electronic device to identify a second state different from the first state, based on deleting the at least one messenger data set among the one or more first data sets. The instructions, when executed by the processor, may cause the electronic device to store one or more second messenger data sets generated using the source process. The second state may be a state in which the one or more first messenger data sets below the threshold value are stored.

For example, the instructions, when executed by the processor, may cause the electronic device to terminate the source process, in response to an input indicating a termination of the source process using the visual object.

For example, the instructions, when executed by the processor, may cause the electronic device to generate log information 350 indicating that the one or more messenger data sets equal to or greater than the threshold value are stored using the source process in the state.

For example, the instructions, when executed by the processor, may cause the electronic device to temporarily refrain from initiating the execution of the function of the target process, using the log information.

For example, the instructions, when executed by the processor, may cause the electronic device to display the visual object indicating an application corresponding to the source process.

For example, the instructions, when executed by the processor, may cause the electronic device to generate one or more third messenger data sets different from the one or more messenger data sets using the source process, in the state. The instructions, when executed by the processor, may cause the electronic device to delete the one or more third messenger data sets, using the binder driver.

As described above, according to an embodiment, a method performed by an electronic device may comprise storing 610 one or more messenger data sets 310 for executing a function of a target process 213 using a source process 211 in a buffer area 227 of a memory 130 assigned to the target process based on an execution of the binder driver 225. The method may comprise temporarily refraining 630 from initiating an execution of the function of the target process, using binder driver, in state in which one or more messenger data sets equal to or greater than a threshold value is stored in the buffer area. The method may comprise displaying 640 a visual object indicating information for the source process, by controlling a display 250.

For example, the refraining from temporarily initiating the execution of the function of the target process may comprise deleting at least one among the one or more messenger data sets stored in the buffer area of the memory assigned to the target process.

For example, the storing the one or more messenger data sets may comprise identifying each of the one or more messenger data sets matching the function of the target process.

For example, the one or more messenger data sets may be one or more first messenger data sets. The deleting the at least one among the one or more first messenger data sets may comprise identifying a second state different from a first state which is the state, based on deleting the at least one. The method may comprise storing one or more second messenger data sets generated using the source process. The second state may be a state in which the one or more first messenger data sets below the threshold value are stored.

For example, the displaying the visual object may comprise terminating the source process, in response to an input indicating a termination of the source process using the visual obj ect.

For example, the refraining from temporarily initiating the execution of the function of the target process may comprise generating log information 350 indicating that the one or more messenger data sets equal to or greater than the threshold value are stored using the source process in the state.

For example, the generating the log information may comprise temporarily refraining from initiating the execution of the function of the target process, using the log information.

For example, the displaying the visual object may comprise displaying the visual object indicating an application corresponding to the source process.

As described above, according to an embodiment, an electronic device may comprise a display 250, a memory 130 storing instructions, and a processor 120. The instructions, when executed by the processor, may cause the electronic device to store one or more messenger data sets 310 for executing a function of a target process 213 using a source process 211 in a buffer area 227 of the memory assigned to the target process based on an execution of the binder driver 225. The instructions, when executed by the processor, may cause the electronic device to generate log information 350 indicating a state of the source process, based on storing the one or more messenger data sets equal to or greater than a threshold value. The instructions, when executed by the processor, may cause the electronic device to delete the one or more messenger data sets stored in the buffer area, using the generated log information.

For example, the instructions, when executed by the processor, may cause the electronic device to temporarily refrain from initiating an execution of the function of the target process, based on the execution of the binder driver, using the log information.

For example, the instructions, when executed by the processor, may cause the electronic device to display a visual object 380 and 510 indicating the state for the source process, by controlling the display.

For example, the instructions, when executed by the processor, may cause the electronic device to terminate the source process, in response to an input indicating a termination of the source process using the visual object.

For example, the instructions, when executed by the processor, may cause the electronic device to change log information indicating the state of the source process based on deleting the one or more messenger data sets stored in the buffer area.

For example, the instructions, when executed by the processor, may cause the electronic device to identify a second state of the source process different from a first state, which is the state, based on the changed log information. The instructions, when executed by the processor, may cause the electronic device to store one or more second messenger data sets different from one or more first messenger data sets, which are the one or more messenger data sets, generated using the source process, in the second state.

For example, the instructions, when executed by the processor, may cause the electronic device to obtain an input regarding the visual object during displaying the visual obj ect for guiding whether to terminate the source process. For example, the instructions, when executed by the processor, may cause the electronic device to terminate the source process in response to the input regarding the visual object.

The binder driver may be a program that is executed in kernel space to control interprocess communication (IPC) for calling the function of the target process by the source process. The source process and the target process may be a process of an application that is executed in a user space that is different from the kernel space. The buffer area may be an area in memory assigned to the target process by the binder driver for execution of the function of the target process.

As described above, according to an embodiment, a method of an electronic device may comprise based on execution of a binder driver 225, storing one or more messenger data sets 310 for executing a function of a target process 213 using a source process 211 in a buffer area 227 of a memory 130 assigned to the target process. The method may comprise generating log information 350 indicating a first state of the source process, based on storing an amount of one or more messenger data sets are equal to or greater than a threshold value in the buffer area. The method may comprise deleting the one or more messenger data sets stored in the buffer area, using the generated log information.

For example, the method may comprise temporarily refraining from initiating an execution of the function of the target process, based on the execution of the binder driver, using the log information.

For example, the method may comprise displaying a visual object 380; 510 indicating the state for the source process, by controlling a display 250.

For example, the method may comprise terminating the source process, corresponding to an input indicating a termination of the source process, using the visual object.

For example, the method may comprise changing log information indicating the state of the source process based on deleting the one or more messenger data sets stored in the buffer area.

For example, the method may comprise identifying a second state of the source process different from a first state, which is the state, based on the changed log information. The method may comprise storing one or more second messenger data sets different from one or more first messenger data sets, which are the one or more messenger data sets, generated using the source process, in the second state.

For example, the method may comprise obtaining an input regarding the visual object during displaying the visual object for guiding whether to terminate the source process. For example, the method may comprise terminating the source process in response to the input regarding the visual object.

The apparatus described above may be implemented as a combination of hardware components, software components, and/or hardware components and software components. For example, the devices and components described in the embodiments may be implemented using one or more general purpose computers or special purpose computers such as processors, controllers, arithmetical logic unit(ALU), digital signal processor, microcomputers, field programmable gate array (FPGA), PLU(programmable logic unit), microprocessor, any other device capable of executing and responding to instructions. The processing device may perform an operating system OS and one or more software applications performed on the operating system. In addition, the processing device may access, store, manipulate, process, and generate data in response to execution of the software. For convenience of understanding, although one processing device may be described as being used, a person skilled in the art may see that the processing device may include a plurality of processing elements and/or a plurality of types of processing elements. For example, the processing device may include a plurality of processors or one processor and one controller. In addition, other processing configurations, such as a parallel processor, are also possible.

The software may include a computer program, code, instruction, or a combination of one or more of them and configure the processing device to operate as desired or command the processing device independently or in combination. Software and/or data may be embodied in any type of machine, component, physical device, computer storage medium, or device to be interpreted by a processing device or to provide instructions or data to the processing device. The software may be distributed on a networked computer system and stored or executed in a distributed manner. Software and data may be stored in one or more computer-readable recording media.

The method according to the embodiment may be implemented in the form of program instructions that may be performed through various computer means and recorded in a computer-readable medium. In this case, the medium may continuously store a computer-executable program or temporarily store the program for execution or download. In addition, the medium may be a variety of recording means or storage means in which a single or several hardware are combined and is not limited to media directly connected to any computer system and may be distributed on the network. Examples of media may include magnetic media such as hard disks, floppy disks and magnetic tapes, optical recording media such as CD-ROMs and DVDs, magnetooptical media such as floppy disks, ROMs, RAMs, flash memories, and the like to store program instructions. Examples of other media include app stores that distribute applications, sites that supply or distribute various software, and recording media or storage media managed by servers.

Although embodiments have been described according to limited embodiments and drawings as above, various modifications and modifications are possible from the above description to those of ordinary skill in the art. For example, even if the described techniques are performed in a different order from the described method, and/or components such as the described system, structure, device, circuit, etc. are combined or combined in a different form from the described method or are substituted or substituted by other components or equivalents, appropriate results may be achieved.

Therefore, other implementations, other embodiments, and equivalents to the claims fall within the scope of the claims to be described later.

## Claims

1. An electronic device, comprising:
a display (250);
a memory (130) storing instructions; and
a processor (120),
wherein the instructions, when executed by the processor, cause the electronic device to:
based on execution of a binder driver (225), store one or more messenger data sets (310) for executing a function of a target process (213) using a source process (211) in a buffer area (227) of the memory assigned to the target process;
temporarily refrain from initiating an execution of the function of the target process, using the binder driver, in a first state in which an amount of one or more messenger data sets stored in the buffer area is equal to or greater than a threshold value; and
display a visual object indicating information for the source process, by controlling the display.

2. The electronic device of claim 1, wherein the instructions, when executed by the processor, cause the electronic device to:
delete at least one among the one or more messenger data sets stored in the buffer area of the memory assigned to the target process, based on temporarily refraining from initiating the execution of the function of the target process.

3. The electronic device of claim 1, wherein the instructions, when executed by the processor, cause the electronic device to:
identify each of the one or more messenger data sets matching the function of the target process as a spam data set.

4. The electronic device of claim 2,
wherein the one or more messenger data sets is one or more first messenger data sets, and
wherein the instructions, when executed by the processor, cause the electronic device to:
identify a second state different from the first state, based on deleting the at least one messenger data set among the one or more first messenger data sets,
store one or more second messenger data sets generated using the source process, and
wherein the second state is a state in which the one or more first messenger data sets below the threshold value are stored.

5. The electronic device of claim 1, wherein the instructions, when executed by the processor, cause the electronic device to:
obtain an input regarding the visual object during displaying the visual object for guiding whether to terminate the source process, and
terminate the source process in response to the input regarding the visual object.

6. The electronic device of claim 1, wherein the instructions, when executed by the processor, cause the electronic device to:
generate log information (350) indicating that the one or more messenger data sets equal to or greater than the threshold value are stored using the source process in the state.

7. The electronic device of claim 6, wherein the instructions, when executed by the processor, cause the electronic device to:
temporarily refrain from initiating the execution of the function of the target process, using the log information.

8. The electronic device of claim 1, wherein the instructions, when executed by the processor, cause the electronic device to:
display the visual object indicating an application corresponding to the source process.

9. The electronic device of claim 1, wherein the instructions, when executed by the processor, cause the electronic device to:
generate one or more third messenger data sets different from the one or more messenger data sets using the source process, in the state, and
delete the one or more third messenger data sets, using the binder driver.

10. The electronic device of claim 1,
wherein the binder driver is a program that is executed in kernel space to control interprocess communication (IPC) for calling the function of the target process by the source process,
wherein the source process and the target process is a process of an application that is executed in a user space that is different from the kernel space, and
wherein the buffer area is an area in memory assigned to the target process by the binder driver for execution of the function of the target process.

11. A method of an electronic device (101), wherein the method comprises:
based on executing a binder driver (225), storing one or more messenger data sets (310) for executing a function of a target process (213) using a source process (211) in a buffer area (227) of a memory (130) assigned to the target process;
temporarily refraining from initiating an execution of the function of the target process, using binder driver, in a first state in which an amount of one or more messenger data sets stored in the buffer areas is equal to or greater than a threshold value are stored in the buffer area; and
displaying a visual object indicating information for the source process, by controlling a display (250).

12. The method of claim 11, wherein the refraining from temporarily initiating the execution of the function of the target process comprises:
deleting at least one among the one or more messenger data sets stored in the buffer area of the memory assigned to the target process.

13. The method of claim 11, wherein the storing the one or more messenger data sets comprises:
identifying each of the one or more messenger data sets matching the function of the target process as a spam data set.

14. The method of claim 12, wherein the one or more messenger data sets is one or more first messenger data sets, and
wherein the method comprises:
identifying a second state different from the first state, based on deleting the at least one messenger data set among the one or more first messenger data sets,
storing one or more second messenger data sets generated using the source process, and
wherein the second state is a state in which the one or more first messenger data sets below the threshold value are stored.

15. The method of claim 11, comprises:
obtaining an input regarding the visual object during displaying the visual object for guiding whether to terminate the source process, and
terminating the source process in response to the input regarding the visual object.
